# EUROPEAN PATENT SPECIFICATION

(11) **EP 4 119 687 B1**
(45) Date of publication and mention of the grant of the patent: **09.10.2024**
(21) Application number: 21799770.9
(22) Date of filing: 29.04.2021
(51) Int. Cl.: C21C 5/52, C21C 7/06, C21C 7/10, C21D 8/06, C21D 9/52, C22B 9/18, C22C 38/02, C22C 38/04, B21B 1/16, C22B 9/04, C22C 33/04

(54) **PROCESS FOR SMELTING STEEL FOR ULTRAFINE CARBORUNDUM WIRE**
VERFAHREN ZUM SCHMELZEN VON STAHL FÜR ULTRAFEINEN KOHLENSTOFFDRAHT
PROCÉDÉ DE FUSION D'ACIER POUR FIL DE CARBORUNDUM ULTRAFIN

(30) Priority: 06.05.2020 CN 202010373412
(43) Date of publication of application: 18.01.2023
(73) Proprietor: BAOSHAN IRON & STEEL CO., LTD., Shanghai 201900 (CN)
(72) Inventor: XU, Yingtie, Shanghai 201900 (CN); HUANG, Zongze, Shanghai 201900 (CN); LIU, Xiangjiang, Shanghai 201900 (CN); WAN, Genjie, Shanghai 201900 (CN); QI, Yanfeng, Shanghai 201900 (CN)
(74) Representative: Nederlandsch Octrooibureau
(86) International application number: PCT/CN2021/091085
(87) International publication number: WO 2021/223660

(56) References cited:
- EP-A1- 3 971 316
- CN-A- 102 492 894
- CN-A- 102 492 894
- CN-A- 102 644 027
- CN-A- 105 220 067
- CN-A- 108 034 895
- CN-A- 108 866 433
- CN-A- 109 402 428
- CN-A- 109 706 385
- CN-A- 110 230 008
- CN-A- 110 230 008
- CN-A- 112 011 742
- US-A- 4 589 916

## Description

### TECHNICAL FIELD

The present invention relates to a process for smelting steel for ultrafine silicon carbide (carborundum) sawing wires, belonging to the technical field of steel making.

### BACKGROUND

Silicon carbide (carborundum) sawing wires are mainly used to cut silicon chips, gemstones, and the like. Among them, the silicon chips are main raw materials for the photovoltaic and electronic industries. In order to improve the cutting efficiency, the silicon carbide (carborundum) sawing wires require an ultrafine specification typically having a diameter of 0.04-0.055 mm, which is thinner than human hair. The ultrafine specification puts forward strict requirements on the control of inclusions in steel. The width of all inclusions contained in the steel should be less than 10 µm, and cannot include brittle aluminum inclusions.

In the prior art, some Japanese enterprises conduct production through the process of converter-refining furnace-continuous casting-primary rolling-wire rolling. In the smelting process, inclusions are controlled mainly by strictly controlling the aluminum content of refractory materials and the denaturation treatment of inclusions to achieve inclusion refinement so that the wire rod has a deformation ability. Even so, the steel wire rod produced by this process still has the phenomenon of wire breakage during the drawing process of silicon carbide (carborundum) sawing wires, and the main cause of wire breakage is large particulate silica-alumina inclusions. Wire breakage has a great impact on the drawing production, and the wire connection time will exceed 2 hours after the wire breakage.

Those enterprises that do not have the capability to produce steel for silicon carbide (carborundum) sawing wires using converter process and electric furnace process face a main problem that they cannot control a complete absence of brittle alumina inclusions and high content of magnesia inclusions. If such inclusions are controlled by improving the refractory material, the production cost of the whole process will be greatly increased.

However, the demand for silicon carbide (carborundum) sawing wires is small, and its profit cannot offset the increase in the cost of refractory materials in the whole process. Therefore, the production of the silicon carbide (carborundum) sawing wires by the converter process or the electric furnace process cannot achieve economic benefits. In order to ensure that the silicon carbide (carborundum) sawing wire can provide enough breaking force and cut the silicon chips efficiently, the requirement for the carbon content in steel is high. Generally, the carbon content in percentage by mass is required to be at least 0.92% or more, preferably more than 1%; in addition, the nitrogen content is required to be less than 50ppm, and such amounts of components cannot be used in other steel grades. In the process of large-scale production of steel for silicon carbide (carborundum) sawing wires by the converter process or the electric furnace process, once the control of inclusions is not up to standard, steel in the whole batch will face the risk of being scrapped, and at the same time, the steel cannot be continuously produced in the continuous casting process. From the perspective of market demand, because of its strong durability, the consumption of the silicon carbide (carborundum) sawing wires during service is not large, for example, the market demand in China is maintained at 2,000-10,000 tons, and silicon carbide (carborundum) sawing wire manufacturers typically order no more than 30 tons each time from steel manufacturers. In this case, production with an electric furnace process or converter process of 100 tons or more will cause the problem that the production cannot be organized. CN110230008A concerns a superfine extra-high-strength steel wire, a steel wire rod for the superfine extra-high-strength steel wire, and a production method of the steel wire rod.

### SUMMARY

In order to overcome the above-mentioned deficiencies in the prior art, the present invention provides a small-scale process for smelting steel for ultrafine silicon carbide (carborundum) sawing wires having high requirements, as defined in the appended set of claims. This process can control inclusions to produce ultrafine silicon carbide (carborundum) sawing wires without occurring wire breakage during the drawing process of the silicon carbide (carborundum) sawing wire.

The technical problems to be solved can be implemented by the following technical solutions.

Provided is a process for smelting steel for ultrafine silicon carbide (carborundum) sawing wires, of which the production process can be summarized as smelting in a vacuum induction furnace-electroslag-forging-wire rolling, and the main steps comprised in the process are as follows:
1) Melting a raw material into 2-5 tons of liquid molten steel under the protection of argon in a vacuum induction furnace with a volume of 2-5 tons, the raw material uses carbon-free pure iron and low-phosphorus pig iron having a carbon content of 3.5%-4.5% by mass and a phosphorus content of less than 0.06% by mass; then vacuumizing to perform vacuum smelting and degassing for 15-20 min under a high vacuum condition of 300 Pa or below, and performing deoxygenation with high-purity silicon iron as a deoxidizer to adjust components of the molten steel, wherein aluminum-containing deoxidizer is strictly forbidden in the deoxygenation process; and after the adjustment of the components of the molten steel, 1-2 of circular ingots are cast in vacuum, wherein each ingot has a mass of 1.5-2.5 tons, a diameter of 0.35-0.4 m and a length of 2-3 m.
   In this process, the vacuum induction furnace is selected as a primary smelting furnace for its characteristics of capable of small-scale smelting and function of vacuum degassing so as to meet the denitrification requirements of the steel grade directed in the present invention; in addition, the vacuum induction furnace can also realize vacuum protective casting, which can avoid secondary oxidation and nitrogen absorption of the molten steel caused by casting under room atmosphere. Considering that the weight of the casting ingot is 1.5-2.5 tons, when casting 1-2 ingots is needed, a vacuum induction furnace with a scale of 2-5 tons needs to be selected for production; if a larger-scale induction furnace is selected, 3 or more ingots will need to be cast, which makes it difficult to realize vacuum casting. The selection of the pure iron and the pig iron as raw materials mainly because of the configuration of the carbon content of the steel grade. The pig iron contains about 4% of carbon (by mass), which can meet the requirement that the carbon content in the final molten steel is about 1% (by mass); in addition, the content of harmful residual elements in the pure iron and the pig iron is low, which can ensure that the harmful residual elements in the steel do not exceed the standard. Degassing under a high vacuum condition for 15-20min is mainly to ensure that the denitrification can meet the requirements of the steel grade, and at the same time, dehydrogenation can also be performed to ensure that no hydrogen-induced cracks are produced. The components of the molten steel can be adjusted during the vacuum smelting process, and high-purity manganese and high-purity silicon iron are added to meet the final composition requirements of the product, wherein high-purity silicon iron refers to an iron material with a silicon content of 75-85% by mass and an aluminum content of less than 0.05% by mass. The use of high-purity silicon iron as the deoxidizer is mainly due to the high aluminum content of ordinary silicon iron, which is likely to cause the final aluminum content to exceed the standard. It is strictly forbidden to add the aluminum-containing deoxidizer, which is due to the fact that inclusions with high alumina content contained in the steel for the ultrafine silicon carbide (carborundum) wire are brittle inclusions, which will greatly damage the drawing of the silicon carbide (carborundum) sawing wires. The selection of the final ingot size is mainly based on the size requirements of the electrode bar for electroslag involved in the subsequent process.
2) Cleaning the surface of the circular ingots, and 5-10 cm of a shrinkage end is cut off to manufacture electrode bars for electroslag smelting. The "shrinkage end" mentioned in the present application refers to an end of the ingot that solidifies at the last.
3) Remelting and smelting the electrode bars as raw materials in an electroslag furnace, wherein an electroslag protecting slag comprises the following in percentage by mass: CaF₂: 45-55%, Al₂O₃: 15-25%, SiO₂: 20-25%, Na₂O: 2-4%, and K₂O: 1-2%, and smelting the electrode bar in the electroslag furnace into a cylindrical electroslag ingot having a diameter of 0.4-0.5 m.
   During remelting and smelting in the electroslag furnace, the electrode bar, slag, and molten steel in the crystallizer are connected into an energized circuit. Under the conditions of low voltage (a voltage of 40-60V) and high current (a current of 10-20KA), the electroslag protecting slag is used to generate local heating, so that the part in contact with the electroslag protecting slag of the top of the electrode bar gradually melts into droplets, and the large number of droplets separated from the electrode bar passes through the slag layer of the electroslag protecting slag and fall into the molten steel bath of the crystallizer, then the part in contact with the crystallizer of the molten steel bath is solidified again. During remelting and smelting in the electroslag furnace, the molten steel is filtered by the electroslag protecting slag, which can completely remove large inclusions, and the remaining inclusions are all less than 13 µm; meanwhile, the structure of the electroslag ingot obtained by remelting and smelting in the electroslag furnace is uniform and dense. After remelting and smelting in the electroslag furnace, the remaining inclusions in the steel are closer to the composition of the electroslag protecting slag in the electroslag furnace. Therefore, the present technical solution controls the composition of the electroslag protecting slag to be: CaF₂: 45-55%, Al₂O₃: 15-25%, SiO₂: 20-25%, Na₂O: 2-4%, and K₂O: 1-2% (based on 100% of the total mass of the electroslag protecting slag), so as to control the composition of the remaining small-particle inclusions in the molten steel also falling into this range. In the electroslag protecting slag, a part of the CaF₂ is converted into CaO. The inclusions in this range have the characteristics of low melting point and strong plasticizing ability, which enables sufficient deformation of the ingot along both the forging or rolling direction during the subsequent forging and rolling process, and the widths of the inclusions after deformation can all be less than 7µm; moreover, the contact surface between the inclusions and the steel is relatively smooth, and the damage to the steel during the drawing process will be small, which will not cause wire breakage during drawing, and also ensures that the silicon carbide (carborundum) wire will not break in the cutting process of the silicon chips. The selection of the size of the electroslag ingot is mainly based on the convenience of electroslag crystallizer design and subsequent forging.
4) Forging the electroslag ingot into a forged billet for wire rolling, wherein the forged billet is a square billet having a cross section of square with a side length of 0.140-0.160 m, and the forged billet has a length of greater than 6 m and less than 14 m.
5) Rolling the forged billet into a steel wire rod having a diameter specification of 4.5-5.5 mm by the wire rolling process, wherein the steel wire rod comprises the following components in percentage by mass: [C]: 0.92-1.1%, [Si]: 0.3-0.4%, [Mn]: 0.5-0.8%, [Al]: less than 0.0008%, [N]: less than 0.005%, [S]: less than 0.01%, [P]: less than 0.015%, and the balance of iron and unavoidable impurities.

The steel wire rod produced by the present invention can finally be drawn into a silicon carbide (carborundum) sawing wire having an ultrafine specification with a diameter of 0.04-0.055 mm, which will not occur wire breakage in the drawing process, and suitable for high efficiency cutting of silicon chips, gemstones and the like.

As a further improvement of the present technical solution, in step 1), it is further required that at the end of the smelting in the vacuum induction furnace, the molten steel comprises the following elemental components in percentage by mass: [C]: 0.94-1.1%, [Si]: 0.35-0.45%, [Mn]: 0.6-0.8%, [Al]: less than 0.001%, [N]: less than 0.0045%, [S]: less than 0.01%, [P]: less than 0.015%, and the balance of iron and unavoidable impurities. Specifically, considering that silicon will be further attenuated during the electroslag process, the silicon content after the smelting in the vacuum induction furnace should be higher; moreover, since aluminum will be further attenuated during the electroslag process, [Al]<0.0008%, if required, would be difficult to achieve at this stage, so the content of Al is configured to [Al]<0.001%.

The temperature of the molten steel at the end of the smelting in the vacuum induction furnace is controlled at 1460-1500°C; after the %, smelting in the vacuum induction furnace, argon is properly blown as a protective atmosphere, so that the pressure in the furnace is adjusted to 10000Pa-20000Pa, and then casting under the protective atmosphere. The protective atmosphere is, for example, but not limited to, argon, and the casting mold adopts a cast iron mold.

At the end of the smelting in the vacuum induction furnace, the content of carbon, silicon and aluminum in the molten steel will be slightly higher than that in steel after remelting and smelting in the electroslag furnace, which is mainly due to a certain attenuation of carbon, silicon and aluminum in the molten steel during remelting and smelting in the electroslag furnace. The temperature of the molten steel at the end of the smelting in the vacuum induction furnace is controlled to be 1460-1500°C, which mainly considers that the superheat degree of casting is 20-60°C, which can cast an electrode bar capable of electroslag smelting. In practical production, if only one ingot is cast, the end point temperature can be controlled close to the lower limit, that is, close to 1460°C; if two ingots are cast, the end point temperature can be controlled close to the upper limit, that is, close to 1500°C, otherwise casting of the second ingot may not be completed. Vacuum protective casting is to prevent nitrogen absorption and secondary oxidation during the casting process.

As a further improvement of the present technical solution, in step 1), after the iron raw materials (the iron raw materials include pure iron and low-phosphorus pig iron) are completely melted, 2-5 kg of lime is added per ton of the iron raw materials for slag making, dephosphorization and desulfurization. During the smelting in the vacuum induction furnace, it is not advisable to add too much slagging material (in this technical solution, the slagging material is lime), otherwise it will cause problems such as difficulty in melting the slagging material and affecting degassing. However, since the raw materials inevitably contain sulfur and phosphorus, in order to ensure that the desulfurization and dephosphorization are sufficiently performed, a small amount of lime can be added to meet the requirements for sulfur and phosphorus contents of the product.

As a further improvement of the present technical solution, in step 3), the electroslag process needs to be carried out under a protective atmosphere including but not limited to argon; and the step of remelting and smelting in the electroslag furnace are remelting and smelting at a constant melting rate.

The step of remelting and smelting in the electroslag furnace under the protective atmosphere is mainly for preventing oxidation. If the secondary oxidation is serious, it will easily lead to serious attenuation of silicon and carbon in the molten steel due to oxidation; and at the same time, secondary oxidation of the molten steel will form more silica inclusions, which is unfavorable for the control of inclusions in the molten steel.

The present invention develops a brand-new process path, that is, through the steps of smelting in the vacuum induction furnace-electroslag-forging-wire rolling to produce the steel wire rod for the silicon carbide (carborundum) wire. The adoption of such process path is mainly based on the characteristics of low demand and high requirements for the steel for the silicon carbide (carborundum) wire, which can facilitate small-scale production of the steel for the silicon carbide (carborundum) wire, and solve the problem of excessive quantity of extra steel that cannot be utilized because of the adoption of massive converter process or an electric furnace process which produce far more weight of steel in each batch than the ordered quantity. This process completely removes large particulate inclusions and brittle inclusions through the electroslag process, and can control the composition of the inclusions within the required range of inclusion plasticization, so as to achieve decontamination of all inclusions in the steel and avoid wire breakage during drawing of the silicon carbide (carborundum) wire. In this process, production may be performed at night, which can make full use of the power grid capacity during the low-peak period.

The process provided by the above technical solution has the following beneficial effects:
small-scale flexible and stable production of the steel for ultrafine silicon carbide (carborundum) sawing wires can be achieved, and the widths of inclusions in the obtained final steel wire rod are all less than 7 µm, which ensures that no wire breakage due to the inclusions will occur for the steel wire rod in each drawing process of the silicon carbide (carborundum) wire.

### DETAILED DESCRIPTION

The present invention provides a process for smelting steel for ultrafine silicon carbide (carborundum) sawing wires through a new steel-making process path design to produce high-end steel for the ultrafine silicon carbide (carborundum) sawing wires, which can realize the flexible and stable production of the steel for the silicon carbide (carborundum) sawing wires, and fundamentally solves the problem of wire breakage in the subsequent silicon carbide (carborundum) wire drawing process caused by poor control of inclusions.

The process includes main steps as follows:
1) Smelting a molten steel masterbatch of the steel for ultrafine silicon carbide (carborundum) sawing wires in a vacuum induction furnace by using carbon-free pure iron and low-phosphorus pig iron containing 3.5%-4.5% of carbon and less than 0.06% of phosphorus as raw materials, followed by casting into a circular ingot;
2) Manufacturing electrode bars for electroslag smelting from the circular ingot;
3) Remelting and smelting the electrode bars as raw materials in an electroslag furnace to manufacture an electroslag ingot, wherein the electroslag protecting slag including the following components in percentage by mass: CaF₂: 45-55%, Al₂O₃: 15-25%, SiO₂: 20-25%, Na₂O: 2-4%, and K₂O: 1-2%;
4) Forging; and
5) Rolling by wire rolling process for a steel wire rod having a diameter of 4.5-5.5 mm, wherein the steel wire rod includes the following chemical elements in percentage by mass: [C]: 0.92-1.1%, [Si]: 0.3-0.4%, [Mn]: 0.5-0.8%, [Al]: less than 0.0008%, [N]: less than 0.005%, [S]: less than 0.01%, [P]: less than 0.015%, and the balance of iron and unavoidable impurities.

The steel wire rod can be drawn into a silicon carbide (carborundum) wire having a diameter of 0.04-0.055 mm while no wire breakage caused by poor control of inclusions will occur in the drawing process.

### Example 1:

The process of smelting in a vacuum induction furnace-electroslag-forging-wire rolling provided by the present application is used to produce steel for silicon carbide (carborundum) sawing wires, and the main process steps thereof are as follows:
1) 1.5 tons of carbon-free pure iron rods and 0.5 tons of pig iron containing 4% of carbon (the phosphorus content of the pig iron is less than 0.06%) are used as raw materials to be melted into 2 tons of liquid molten steel under the protection of argon in a vacuum induction furnace with a capacity of 2 tons and having the function of vacuum casting. After the molten steel is completely melted, 10kg of lime is added, and vacuumizing is performed to start vacuum smelting including degassing for 15min under a high vacuum condition of 300Pa or below. In the process of vacuum smelting, 8kg of high-purity silicon iron (containing 75% of silicon) and 18kg of pure manganese alloy are added to adjust components of the molten steel, wherein after the smelting in this step, the molten steel comprises the following chemical elements in percentage by mass: [C]: 1.05%, [Si]: 0.41% of [Si], [Mn]: 0.7%, [Al]: 0.00079% of, [N]: 0.0040%, [S]: 0.008%, [P]: 0.014%, and the balance of iron and unavoidable impurities. Then, argon is blown into the vacuum induction furnace while adjusting the pressure in the furnace to 10000 Pa or slightly higher and the temperature of the molten steel to 1465°C and finally a circular ingot is cast under vacuum. The ingot solely has a mass of 2 tons, a diameter of 0.35 m and a length of 2.8 m.
2) The surface of the circular ingot is cleaned by grinding, and 5 cm of the ingot head with a shrinkage end is cut off to produce an electrode bar for electroslag smelting.
3) The electrode bar is used as raw material for remelting and smelting at a constant melting rate in an electroslag furnace under a protective atmosphere of argon. The electroslag protecting slag comprises the following in percentage by mass: CaF₂: 45%, Al₂O₃: 25%, SiO₂: 25%, Na₂O: 3%, and K₂O: 2% of. The electrode bar is smelted in the electroslag furnace into a cylindrical electroslag ingot with a diameter of 0.45 m and a length of 1.6 m.
4) The electroslag ingot is forged into a forged billet for wire rolling, wherein the forged billet is a square billet having a cross section of square with a side length of 0.140 m, and the forged billet has a length of 12.5 m.
5) The forged billet is rolled into a steel wire rod having a diameter of 4.5 mm by a wire rolling process. The steel wire rod includes the following chemical elements in percentage by mass: [C]: 1.02%, [Si]: 0.35%, [Mn]: 0.6%, [Al]: 0.0005%, [N]: 0.0048%, [S]: 0.008%, [P]: 0.014%, and the balance of iron and unavoidable impurities. Inclusions in the steel wire rod are detected as a CaF₂-CaO-SiO₂-Al₂O₃-Na₂O-K₂O composite inclusion, and a SiO₂-Al₂O₃-MnO-CaO-MgO-Na₂O-K₂O composite inclusion (the SiO₂ contents in both composite inclusions are greater than 50%). These two series of inclusions have good plasticity, and the widths of the inclusions are all less than 6 µm, which are harmless inclusions and will not cause wire breakage in the steel wire rod drawing process.

The steel wire rod produced in this example can finally be drawn into a silicon carbide (carborundum) master wire with a diameter of 0.05 mm while no wire breakage will occur in the drawing process and the silicon carbide (carborundum) wire can be used for high efficiency cutting of silicon chips, gemstones and the like.

### Example 2:

The process of smelting in a vacuum induction furnace-electroslag-forging-wire rolling provided by the present application is used to produce steel for silicon carbide (carborundum) sawing wires, and the main process steps thereof are as follows:
1) 3.75 tons of carbon-free pure iron rods and 1.25 tons of pig iron containing 3.9% of carbon (the phosphorus content of the pig iron is less than 0.06%) are used as raw materials to be melted into 5 tons of liquid molten steel under the protection of argon in a vacuum induction furnace with a capacity of 5 tons and having the function of vacuum casting. After the molten steel is completely melted, 20kg of lime is added, and vacuumizing is performed to start vacuum smelting including degassing for 20min under a high vacuum condition of 300Pa or below. In the process of vacuum smelting, 20kg of high-purity silicon iron (containing 75% of silicon) and 45kg of pure manganese alloy are added, wherein after the smelting, the molten steel in this step, the molten steel comprises the following chemical elements in percentage by mass: [C]: 0.96%, [Si]: 0.45%, [Mn]: 0.75%, [Al]: 0.0009%, [N]: 0.0038%, [S]: 0.0095%, [P]: 0.013%, and the balance of iron and unavoidable impurities. Then, argon is blown into the vacuum induction furnace while adjusting the pressure in the furnace to 12000 Pa or slightly higher and the temperature of the molten steel to 1485°C, and finally two circular ingots are cast under vacuum, each ingot having a mass of 2.5 tons, a diameter of 0.4 m and a length of 2.6 m.
2) The surface of the circular ingot is cleaned by grinding, and 6 cm of the ingot head with a shrinkage end is cut off to produce an electrode bar for electroslag smelting.
3) The electrode bar is used as raw material for remelting and smelting at a constant melting rate in an electroslag furnace under a protective atmosphere of argon The electroslag protecting slag including in percentage by mass: CaF₂: 51%, Al₂O₃: 22%, SiO₂: 23%, Na₂O: 3%, and K₂O: 1%. The electrode bar is smelted in the electroslag furnace into a cylindrical electroslag ingot with a diameter of 0.5 m and a length of 1.5 m.
4) The electroslag ingot is forged into a forged billet for wire rolling, wherein the forged billet is a square billet having a cross section of square with a side length of 0.16 m, and the forged billet has a length of 12 m.
5) The forged billet is rolled into a steel wire rod having a diameter of 5 mm by a wire rolling process.

The steel wire rod includes the following chemical elements in percentage by mass: [C]: 0.93%, [Si]: 0.4%, [Mn]: 0.5%, [Al]: 0.0006%, [N]: 0.0040%, [S]: 0.0095%, [P]: 0.013%, and the balance of iron and unavoidable impurities. Inclusions in the steel wire rod are detected as a CaF₂-CaO-SiO₂-Al₂O₃-Na₂O-K₂O composite inclusion, and a SiO₂-Al₂O₃-MnO-CaO-MgO-Na₂O-K₂O composite inclusion (the SiO₂ contents in both composite inclusions are greater than 60%). These two series of inclusions have good plasticity, and the widths of the inclusions are all less than 7 µm, which are harmless inclusions and will not cause wire breakage in the steel wire rod drawing process.

The steel wire rod produced in this example can finally be drawn into a silicon carbide (carborundum) master wire with a diameter of 0.055 mm while no wire breakage will occur in the drawing process, and the silicon carbide (carborundum) wire can be used for high efficiency cutting of silicon chips, gemstones and the like.

### Example 3:

The process of smelting in a vacuum induction furnace-electroslag-forging-wire rolling provided by the present application is used to produce steel for silicon carbide (carborundum) sawing wires, and the main process steps thereof are as follows:
1) 3 tons of carbon-free pure iron rods and 1 ton of pig iron containing 4.2% of carbon (the phosphorus content of the pig iron is less than 0.06%) are used as raw materials to be melted into 4 tons of liquid molten steel under the protection of argon in a vacuum induction furnace with a capacity of 4 tons and having the function of vacuum casting. After the molten steel is completely melted, 15kg of lime is added, and vacuumizing is performed to start vacuum smelting including degassing for 18min under a high vacuum condition of 250Pa or below. In the process of vacuum smelting, 15kg of high-purity silicon iron (containing 75% of silicon) and 33kg of pure manganese alloy are added as a deoxidizer for deoxygenation, wherein after the smelting in this step, the molten steel comprises the following chemical elements in percentage by weight: [C]: 1.1%, [Si]: 0.35%, [Mn]: 0.6%, [Al]: 0.0007%, [N]: 0.0034%, [S]: 0.0099%, [P]: 0.012%, and the balance of iron and unavoidable impurities. Then, argon is blown into the vacuum induction furnace while adjusting the pressure in the furnace to 15000 Pa or slightly higher and the temperature of the molten steel to 1495°C, and finally two circular ingots are cast under vacuum, each ingot having a mass of 2 tons, a diameter of 0.38 m and a length of 2.4 m.
2) The surface of the circular ingot is cleaned by grinding, and 8 cm of the ingot head with a shrinkage end is cut off to produce an electrode bar for electroslag smelting.
3) The electrode bar is used as raw material for remelting and smelting at a constant melting rate in an electroslag furnace under a protective atmosphere of argon The electroslag protecting slag including in percentage by mass: CaF₂: 55%, Al₂O₃: 15%, SiO₂: 24%, Na₂O: 4%, and K₂O: 2%. The electrode bar is smelted in the electroslag furnace into a cylindrical electroslag ingot with a diameter of 0.45 m and a length of 1.5 m.
4) The electroslag ingot is forged into a forged billet for wire rolling, wherein the forged billet is a square billet having a cross section of square with a side length of 0.15 m, and the forged billet has a length of 10.3 m.
5) The forged billet is rolled into a steel wire rod having a diameter of 5.5 mm by a wire rolling process. The steel wire rod includes the following chemical elements in percentage by mass: [C]: 1.05%, [Si]: 0.3%, [Mn]: 0.5%, [Al]: 0.0005%, [N]: 0.0038%, [S]: 0.0099%, [P]: 0.012%, and the balance of iron and unavoidable impurities. Inclusions in the steel wire rod are detected as a CaF₂-CaO-SiO₂-Al₂O₃-Na₂O-K₂O composite inclusion, and a SiO₂-Al₂O₃-MnO-CaO-MgO-Na₂O-K₂O composite inclusion (the SiO₂ contents in both composite inclusions are greater than 50%) These two series of inclusions have good plasticity, and the widths of the inclusions are all less than 5 µm, which are harmless inclusions and will not cause wire breakage in the steel wire rod drawing process.

The steel wire rod produced in this example can finally be drawn into a silicon carbide (carborundum) master wire with a diameter of 0.04 mm while no wire breakage will occur in the drawing process, and the silicon carbide (carborundum) wire can be used for high efficiency cutting of silicon chips, gemstones and the like.

## Claims

1. A process for smelting steel for ultrafine silicon carbide (carborundum) sawing wires, comprising the following steps of:
1) melting a raw material into liquid molten steel under the protection of argon in a vacuum induction furnace, the raw material uses carbon-free pure iron and low-phosphorus pig iron having a carbon content of 3.5%-4.5% by mass; then vacuumizing to perform vacuum smelting, the vacuum smelting is performed under a condition of less than 300Pa to degas for 15-20 min, and performing deoxygenation with high-purity silicon iron as a deoxidizer to adjust components of the molten steel; and after the adjustment of the components of the molten steel, casting circular ingots under vacuum condition, wherein each ingot has a mass of 1.5-2.5 tons, a diameter of 0.35-0.4 m and a length of 2-3 m;
2) cleaning the surface of the circular ingots to manufacture electrode bars for electroslag smelting;
3) remelting and smelting the electrode bars as raw materials in an electroslag furnace, wherein an electroslag protecting slag comprises the following in percentage by mass:
CaF₂: 45-55%, Al₂O₃: 15-25%, SiO₂: 20-25%, Na₂O: 2-4%, and K₂O: 1-2%; and
smelting the electrode bar in the electroslag furnace into a cylindrical electroslag ingot having a diameter of 0.4-0.5 m;
4) forging the electroslag ingot into a forged billet for wire rolling, wherein the forged billet is a square billet having a cross section of square with a side length of 0.140-0.160 m, and the forged billet has a length of greater than 6 m; and
5) rolling the forged billet into a steel wire rod having a diameter of 4.5-5.5 mm by the wire rolling process, wherein the steel wire rod comprises the following chemical elements in percentage by weight: [C]: 0.92-1.1%, [Si]: 0.3-0.4%, [Mn]: 0.5-0.8%, [Al]: less than 0.0008%, [N]: less than 0.005%, [S]: less than 0.01%, [P]: less than 0.015 %, and the balance of iron and unavoidable impurities,

2. The process for smelting steel for ultrafine silicon carbide (carborundum) sawing wires according to claim 1, wherein the volume of the vacuum induction furnace is 2-5 tons.

3. The process for smelting steel for ultrafine silicon carbide (carborundum) sawing wires according to claim 1, wherein in step 2), after cleaning the surface of the circular ingot, 5-10 cm of a shrinkage end is cut off.

4. The process for smelting steel for ultrafine silicon carbide (carborundum) sawing wires according to claim 1, wherein in the step of smelting in the vacuum induction furnace in step 1), after the smelting, the molten steel comprises the following elemental components in percentage by mass: [C]: 0.94-1.1%, [Si]: 0.35-0.45%, [Mn]: 0.6-0.8%, [Al]: less than 0.001%, [N]: less than 0.0045%, [S]: less than 0.01% , [P]: less than 0.015% , and the balance of iron and unavoidable impurities; the temperature of the molten steel is controlled at 1460-1500°C; and after the smelting, argon is blown in as a protective atmosphere and adjusting the pressure in the vacuum induction furnace to 10000-20000 Pa, then casting under the protective atmosphere.

5. The process for smelting steel for ultrafine silicon carbide (carborundum) sawing wires according to claim 1 or 4, wherein in step 1), a casting mold for casting the ingot is a cast iron mold.

6. The process for smelting steel for ultrafine silicon carbide (carborundum) sawing wires according to claim 1, wherein in step 1), after the raw materials are completely melted, 2-5 kg of lime is added per ton of the raw materials for slag making, dephosphorization and desulfurization.

7. The process for smelting steel for ultrafine silicon carbide (carborundum) sawing wires according to claim 1, wherein the step 3) is carried out under a protective atmosphere, and the step of remelting and smelting in the electroslag furnace is remelting and smelting at a constant melting rate in the electroslag furnace.

## Patentansprüche

1. Verfahren zum Schmelzen von Stahl für ultrafeine Siliziumcarbid-(Karborund-) Sägedrähte, das die folgenden Schritte umfasst:
1) Schmelzen eines Ausgangsmaterials in flüssige Stahlschmelze unter dem Schutz von Argon in einem Vakuuminduktionsofen, wobei das Ausgangsmaterial kohlenstofffreies reines Eisen und Roheisen mit geringem Phosphorgehalt, das einen Kohlenstoffgehalt von 3,5 bis 4,5 Masse% hat, verwendet; dann Vakuumieren, um Vakuumschmelzen durchzuführen, wobei das Vakuumschmelzen unter einer Bedingung von weniger als 300 Pa erfolgt, um 15-20 min lang zu entgasen, und Durchführen eines Sauerstoffentzugs mit Siliziumeisen hoher Reinheit als Desoxidationsmittel, um Bestandteile der Stahlschmelze einzustellen; und nach der Einstellung der Bestandteile der Stahlschmelze Gießen von Rundblöcken unter Vakuumbedingung, wobei jeder Block eine Masse von 1,5-2,5 Tonnen, einen Durchmesser von 0,35-0,4 m und eine Länge von 2-3 m hat;
2) Reinigen der Oberfläche der Rundblöcke, um Elektrodenstäbe zum Elektroschlacke-Schmelzen herzustellen;
3) Umschmelzen und Schmelzen der Elektrodenstäbe als Ausgangsmaterialien in einem Elektroschlacke-Ofen, wobei eine Elektroschlacke-Schutzschlacke in Masseprozent Folgendes umfasst:
CaF₂: 45-55%, Al₂O₃: 15-25%, SiO₂: 20-25%, Na₂O: 2-4% und K₂O: 1-2%; und
Schmelzen des Elektrodenstabs in dem Elektroschlacke-Ofen zu einem zylindrischen Elektroschlacke-Barren, der einem Durchmesser von 0,4-0,5 m hat;
4) Schmieden des Elektroschlacke-Barrens zu einem geschmiedeten Knüppel zum Drahtwalzen, wobei der geschmiedete Knüppel ein quadratischer Knüppel ist, der einen viereckigen Querschnitt mit einer Seitenlänge von 0,140-0,160 m hat, und der geschmiedete Knüppel eine Länge von mehr als 6 m hat; und
5) Walzen des geschmiedeten Knüppels durch das Drahtwalzen zu einem Stahlwalzdraht, der einen Durchmesser von 4,5-5,5 mm hat, wobei der Stahlwalzdraht in Gewichtsprozent die folgenden chemischen Elemente umfasst: [C]: 0,92-1,1%, [Si]: 0,3-0,4%, [Mn]: 0,5-0,8%, [Al]: weniger als 0,0008%, [N]: weniger als 0,005%, [S]: weniger als 0,01%, [P]: weniger als 0,015% sowie den Rest aus Eisen und unvermeidbaren Verunreinigungen.

2. Verfahren zum Schmelzen von Stahl für ultrafeine Siliziumcarbid-(Karborund-) Sägedrähte nach Anspruch 1, wobei das Volumen des Vakuuminduktionsofens 2-5 Tonnen beträgt.

3. Verfahren zum Schmelzen von Stahl für ultrafeine Siliziumcarbid-(Karborund-) Sägedrähte nach Anspruch 1, wobei im Schritt 2) nach dem Reinigen der Oberfläche des Rundbarrens 5-10 cm von einem Schwindungsende abgeschnitten wird.

4. Verfahren zum Schmelzen von Stahl für ultrafeine Siliziumcarbid-(Karborund-) Sägedrähte nach Anspruch 1, wobei im Schritt 1) in dem Schritt des Schmelzens im Vakuuminduktionsofen die Stahlschmelze nach dem Schmelzen in Masseprozent die folgenden chemischen Elementbestandteile umfasst: [C]: 0,94-1,1%, [Si]: 0,35-0,45%, [Mn]: 0,6-0,8%, [Al]: weniger als 0,001%, [N]: weniger als 0,0045%, [S]: weniger als 0,01%, [P]: weniger als 0,015% sowie den Rest aus Eisen und unvermeidbaren Verunreinigungen; die Temperatur der Stahlschmelze auf 1460-1500°C gesteuert wird und nach dem Schmelzen Argon als eine Schutzatmosphäre eingeblasen wird und der Druck in dem Vakuuminduktionsofen auf 10000-20000 Pa eingestellt wird, wobei dann das Gießen unter der Schutzatmosphäre erfolgt.

5. Verfahren zum Schmelzen von Stahl für ultrafeine Siliziumcarbid-(Karborund-) Sägedrähte nach Anspruch 1 oder 4, wobei im Schritt 1) eine Gussform zum Gießen des Barrens eine Gusseisenform ist.

6. Verfahren zum Schmelzen von Stahl für ultrafeine Siliziumcarbid-(Karborund-) Sägedrähte nach Anspruch 1, wobei im Schritt 1), nachdem die Ausgangsmaterialien vollständig geschmolzen sind, zum Schlackeerzeugen, Dephosphorisieren und Entschwefeln pro Tonne der Ausgangsmaterialien 2-5 kg Kalk zugegeben wird.

7. Verfahren zum Schmelzen von Stahl für ultrafeine Siliziumcarbid-(Karborund-) Sägedrähte nach Anspruch 1, wobei der Schritt 3) unter einer Schutzatmosphäre erfolgt und der Schritt des Umschmelzens und Schmelzens in dem Elektroschlacke-Ofen ein Umschmelzen und Schmelzen bei einer konstanten Schmelzgeschwindigkeit in dem Elektroschlacke-Ofen ist.

## Revendications

1. - Procédé de fusion d'acier pour fils de sciage de carbure de silicium (carborundum) ultrafins, comprenant les étapes suivantes consistant à :
1) faire fondre une matière première en acier fondu liquide sous la protection d'argon dans un four à induction sous vide, la matière première utilisant du fer pur sans carbone et de la fonte brute à faible teneur en phosphore ayant une teneur en carbone de 3,5% à 4,5% en masse ; puis faire le vide pour réaliser une fusion sous vide, la fusion sous vide étant réalisée dans des conditions de moins de 300 Pa pour dégazer pendant 15 à 20 min, et réaliser une désoxygénation par du ferrosilicium de haute pureté comme désoxydant pour ajuster les composants de l'acier fondu ; et après l'ajustement des composants de l'acier fondu, couler des lingots circulaires dans des conditions de vide, chaque lingot ayant une masse de 1,5 à 2,5 tonnes, un diamètre de 0,35 à 0,4 m et une longueur de 2 à 3 m ;
2) nettoyer la surface des lingots circulaires pour fabriquer des barres d'électrode pour une fusion sous laitier électroconducteur ;
3) réaliser une refusion et une fusion des barres d'électrode en tant que matières premières dans un four sous laitier électroconducteur, un laitier protecteur électroconducteur comprenant ce qui suit en pourcentage en masse :
CaF₂ : 45 à 55 %, Al₂O₃ : 15 à 25 %, SiO₂ : 20 à 25 %,
Na₂O : 2 à 4 % et K₂O : 1 à 2 % ; et
réaliser une fusion de la barre d'électrode dans le four sous laitier électroconducteur en un lingot cylindrique de fusion sous laitier électroconducteur ayant un diamètre de 0,4 à 0,5 m ;
4) forger le lingot de fusion sous laitier électroconducteur en une billette forgée pour un laminage de fil, la billette forgée étant une billette carrée ayant une section transversale d'un carré avec une longueur de côté de 0,140 à 0,160 m, et la billette forgée ayant une longueur supérieure à 6 m ; et
5) laminer la billette forgée en un fil machine en acier ayant un diamètre de 4,5 à 5,5 mm par le procédé de laminage de fil, le fil machine en acier comprenant les éléments chimiques suivants en pourcentage en poids : [C] : 0,92 à 1,1 %, [Si] : 0,3 à 0,4 %, [Mn] : 0,5 à 0,8 %, [Al] : moins de 0,0008 %, [N] : moins de 0,005 %, [S] : moins de 0,01 %, [P] : moins de 0,015 %, et le reste étant du fer et les impuretés inévitables.

2. - Procédé de fusion d'acier pour fils de sciage de carbure de silicium (carborundum) ultrafins selon la revendication 1, dans lequel le volume du four à induction sous vide est de 2 à 5 tonnes.

3. - Procédé de fusion d'acier pour fils de sciage de carbure de silicium (carborundum) ultrafins selon la revendication 1, dans lequel, à l'étape 2), après le nettoyage de la surface du lingot circulaire, 5 à 10 cm d'une extrémité de retrait sont coupés.

4. - Procédé de fusion d'acier pour fils de sciage de carbure de silicium (carborundum) ultrafins selon la revendication 1, dans lequel, dans l'étape de fusion dans le four à induction sous vide de l'étape 1), après la fusion, l'acier fondu comprend les composants élémentaires suivants en pourcentage en masse : [C] : 0,94 à 1,1 %, [Si] : 0,35 à 0,45 %, [Mn] : 0,6 à 0,8 %, [Al] : moins de 0,001 %, [N] : moins de 0,0045 %, [S] : moins de 0,01 %, [P] : moins de 0,015 %, et le reste étant du fer et les impuretés inévitables ; la température de l'acier fondu est contrôlée à 1460 à 1500°C ; et après la fusion, de l'argon est insufflé comme atmosphère protectrice et la pression dans le four à induction sous vide est ajustée à 10 000 à 20 000 Pa, puis une coulée est effectuée sous atmosphère protectrice.

5. - Procédé de fusion d'acier pour fils de sciage de carbure de silicium (carborundum) ultrafins selon l'une des revendications 1 ou 4, dans lequel, à l'étape 1), un moule de coulée pour couler le lingot est un moule en fonte.

6. - Procédé de fusion d'acier pour fils de sciage de carbure de silicium (carborundum) ultrafins selon la revendication 1, dans lequel, à l'étape 1), après que les matières premières sont complètement fondues, 2 à 5 kg de chaux sont ajoutés par tonne de matières premières pour une scorification, une déphosphoration et une désulfuration.

7. - Procédé de fusion d'acier pour fils de sciage de carbure de silicium (carborundum) ultrafins selon la revendication 1, dans lequel l'étape 3) est réalisée sous une atmosphère protectrice, et l'étape de refusion et de fusion dans le four sous laitier électroconducteur est une refusion et une fusion à vitesse de fusion constante dans le four sous laitier électroconducteur.
